# EUROPEAN PATENT APPLICATION

(11) **EP 2 011 407 A2**
(43) Date of publication of application: **07.01.2009**
(21) Application number: 07121401.9
(22) Date of filing: 23.11.2007
(51) Int. Cl.: A23N 12/02, B03B 5/38, B03B 11/00

(54) **Refining method and refining device for separating unnecessary matters from articles**

(30) Priority: 06.07.2007 JP 2007178168
(71) Applicant: Daisey Machinery Co., Ltd., Tsurugashima-shi, Saitama-ken 350-2217 (JP)
(72) Inventor: Kawakami, Sanji, Saitama-ken Saitama 350-2217 (JP)
(74) Representative: Henkel, Feiler & Hänzel

(57) **Abstract**

Provided are a refining method and device in which articles, especially bean sprouts-like articles can be sufficiently applied with refining actions by a simple structure. The refining device for such articles comprises a refining water tank (30) comprising a water storage tank (40) provided with an overflow draining portion (41) and a refining vessel (50) provided in the water storage tank (40) with an interval maintained from an inner surface of the water storage tank (40) and having its bottom portion and side portion at least at one place thereof formed with a multi-hole portion (51). The refining device also comprises a dispersing supply device (5) for supplying the articles to be refined in a dispersed state into the refining water tank (30) and a water supply device (70) supplying feed water obliquely from above into the refining water tank (30). The water supply device (70) is so constructed that supply angle of the feed water can be changed around a pin (73).

## Description

### BACKGROUND OF THE INVENTION

### Field of the Invention

The present invention relates to a refining method and refining device by which dust, shells, fine root portions, broken fractions, etc. (all these things are herein jointly referred to as "unnecessary matters") sticking to or mixing in various kinds of articles, especially bean sprouts, as harvested, cut vegetables, mesclun greens or other fine vegetables (all these articles are herein jointly referred to as "bean sprouts-like articles") are removed so that the articles are refined.

### Description of the Prior Art

In the bean sprouts-like articles, for example, such as bean sprouts, as harvested, etc., unnecessary matters, such as shells of raw material seeds, dust, fine root portions, broken fractions, etc., are mixed and it is necessary to remove these unnecessary matters from the harvested bean sprouts-like articles so that the bean sprouts-like articles are refined. For this purpose, the applicant here has heretofore provided various types of bean sprouts-like articles refining technologies. As one example thereof, there is disclosed a refining device constructed such that the refining device comprises a water tank in which bean sprouts-like articles to be refined are moved in a floating state by water flow and a perforated member having its lower portion formed with a convex surface and being supported in a submerged state on the water surface in the water tank and the perforated member is given with shaking movements including upward and downward movements so that unnecessary matters floating on the water surface of the water tank are caused to flow into an inner side of the perforated member to be separated and the unnecessary matters together with water are sucked by a suction pipe to be discharged (Patent Document 1).

While this refining technology exhibits an excellent refining performance as a refining technology for general bean sprouts-like articles, if articles to be treated are fine and light weight sprouts, such as so called alfalfa sprouts, that are liable to be entangled with each other and have less weight differences from dust, shells, root portions, etc., the refining function is not necessarily sufficient.

Thus, the applicant here has heretofore provided a refining technology appropriate for refining fine and small sprouts, such as alfalfa sprouts, in which sprouts to be refined are supplied into a perforated container having its bottom portion submerged in water in a water tank and are transferred by water ejected from above into the perforated container so that the sprouts are refined by roots, shells, dust, etc. mixed in the sprouts in the perforated container being caused to flow out of the perforated container by the ejected water (Patent Document 2).

While this refining technology is useful for refining the fine and small sprouts, such as the alfalfa sprouts, construction of the device becomes large, as this technology necessitates a construction to move a plurality of the perforated containers and a mechanism to supply the sprouts into the perforated containers and take out the sprouts, after applied with the refining treatment, from the perforated containers. Thus, there is a limitation in ensuring a sufficient space of installation, etc.

### [Patent Document 1] Japanese laid-open patent application

No. 1998-057035

### [Patent Document 2] Japanese laid-open patent application

No. 2002-315556

### SUMMARY OF THE INVENTION

In view of the above-mentioned shortcomings in that the conventional bean sprouts-like articles refining device taken as an example hardly exhibits a sufficient performance for fine and small bean sprouts-like articles, such as alfalfa sprouts, that are liable to be entangled with each other to become a lump state and that the construction is large so that the installation space is limited, it is an object of the present invention to provide a refining method for bean sprouts-like articles or similar articles in general that is able to exhibit a sufficient refining function even for the fine and small articles, such as bean sprouts-like articles like alfalfa sprouts, that are easily entangled with each other, so that the problems in the conventional art can be solved. It is also an object of the present invention to provide a refining device that is suitable for realizing the mentioned refining method by a simple structure.

In order to achieve the above-mentioned object, the present invention provides a refining method for separating unnecessary matters from articles as defined in claim 1 and a refining device for separating unnecessary matters from articles as defined in claim 4. Preferred embodiments of the method and of the device are defined in the dependent claims.
While in the following the invention will be described with particular reference to "bean sprouts-like articles" as the articles refined in the method/device, the invention is applicable to all kinds of articles which are to be treated at one stage up to the final commercial products by refining, i.e. where unnecessary matters are to be removed, and which are similar to "bean sprouts-like articles" with respect to their properties in this respect. However, the invention is particularly advantageous in connection with such "bean sprouts-like articles" which are slender shaped articles, especially bean sprouts-like articles including harvested agricultural food articles, and the unnecessary matters to be separated therefrom are other matters sticking thereto or mixed therewith, especially dust, shells, root portions and broken fractions.

According to the bean sprouts-like articles refining method of the present invention, the feed water is supplied obliquely from above onto the bean sprouts-like articles supplied in the dispersed state into the refining vessel having its lower portion submerged in the water. Hence, the bean sprouts-like articles of the dispersed state in the water in the refining vessel are given with shaking actions by the feed water and the unnecessary matters, such as dust, shells, fine root portions, cut fractions, etc., sticking to or mixing in the bean sprouts-like articles are separated from the bean sprouts-like articles and float in the dispersed state in the water. Lighter ones of the unnecessary matters separated from the bean sprouts-like articles to become the floating state in the water come to the surface and are conveyed to the side portion of the refining vessel by water flow generated in the refining vessel by the feed water supplied obliquely from above so that they are discharged together with the water flow into the water outside of the refining vessel through the multi-hole portion formed in the side portion of the refining vessel. Also, heavier ones of the unnecessary matters separated from the bean sprouts-like articles sink so that they are discharged into the water outside of the refining vessel through the multi-hole portion formed in the bottom portion of the refining vessel. In this way, even the alfalfa sprouts that are fine and are easily entangled with each other can be made into the dispersed state in the refining vessel and the unnecessary matters can be separated and removed therefrom. Thus, the refined sprouts themselves remain in the refining vessel and the unnecessary matters, such as dust, shells, fine root portions, cut fractions, etc., can be discharged outside of the refining vessel through the multi-hole portion. Hence, an excellent refining function can be exhibited.

In the bean sprouts-like articles refining method of the present invention, if the supply angle of the feed water supplied obliquely from above into the refining vessel is changed in the direction of any one of the upward and downward direction and the rightward and leftward direction, the bean sprouts-like articles supplied in the dispersed state into the refining vessel can be given with the shaking actions by the feed water of which supply angle is changed. Thereby, separation and removal of the unnecessary matters sticking to the bean sprouts-like articles are promoted and the refining effect can be further enhanced.

The bean sprouts-like articles refining device according to the present invention comprises the bean sprouts-like articles refining water tank part including the water storage tank and refining vessel and also comprises the bean sprouts-like articles dispersing supply part and the water supply part, as mentioned above. By this construction, the bean sprouts-like articles refining method according to the present invention that has the features as mentioned above can be realized.

In the bean sprouts-like articles refining device according to the present invention, if the bean sprouts-like articles refining water tank part is constructed comprising the plurality of movable bean sprouts-like articles refining water tanks so that refining of the bean sprouts-like articles can be sequentially carried out by the plurality of the bean sprouts-like articles refining water tanks and, in the bean sprouts-like articles refining water tanks in which refining of the bean sprouts-like articles has been finished, the refined bean sprouts-like articles can be applied with at least any one of the sterilizing operation and the bleaching operation, then by the respective single refining devices, the sterilizing operation and the bleaching operation, in addition to the refining operation, can be carried out at the same time and treatments up to the final commercial products can be carried out.

### BRIEF DESCRIPTION OF THE DRAWINGS

Fig. 1 is a side view showing an entire construction of a bean sprouts-like articles refining device of an embodiment according to the present invention.
Fig. 2 is a plan view of a loosening supply device as part of the refining device of Fig. 1.
Fig. 3 is a side view of a bean sprouts-like articles refining water tank as part of the refining device of Fig. 1.
Fig. 4 is a plan view of the refining water tank of Fig. 3.
Fig. 5 is a cross sectional side view of a refining vessel in the refining water tank of Fig. 3.

### DESCRIPTION OF THE PREFERRED EMBODIMENTS

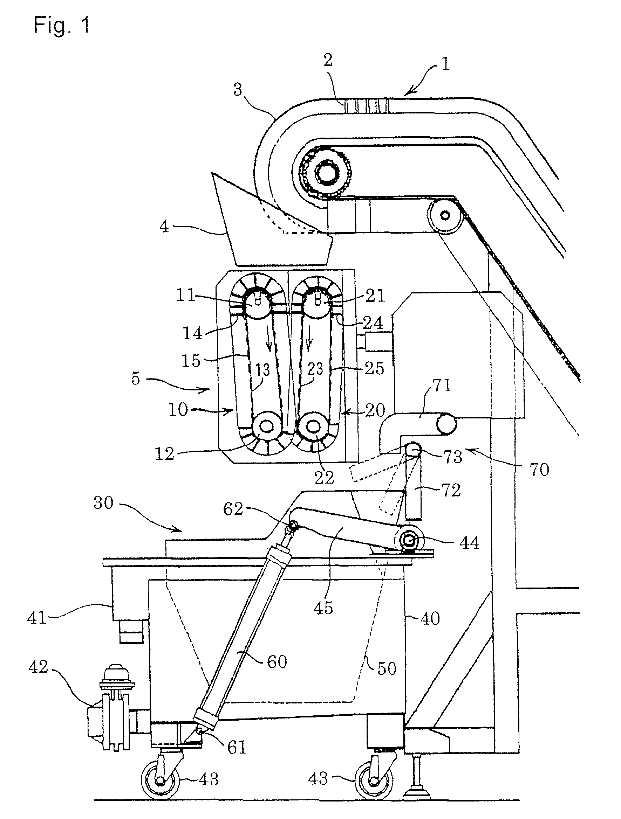

Herebelow, the bean sprouts-like articles refining method and refining device according to the present invention will be more concretely described based on an embodiment as illustrated in appended drawings. The illustrated device is a device for refining alfalfa sprouts, as harvested, by unnecessary matters, such as roots, shells, dust, etc., being separated and removed from the alfalfa sprouts. In Fig. 1, numeral 1 designates a scraping-up conveyor provided inclinedly rising. The scraping-up conveyor 1 is constructed as an endless conveyor having its outer surface provided with a plurality of needle members 2 that perpendicularly rise up from the outer surface and also having its outer side surrounded by a cover 3. The scraping-up conveyor 1 scrapes up and transfers the alfalfa sprouts to be refined from a sprouts storage tank provided on the lower right side in the figure (not shown). The alfalfa sprouts scraped up by the scraping-up conveyor 1 up to an upper end portion of the conveyor are caused to fall down in a dispersed state through a hopper 4.

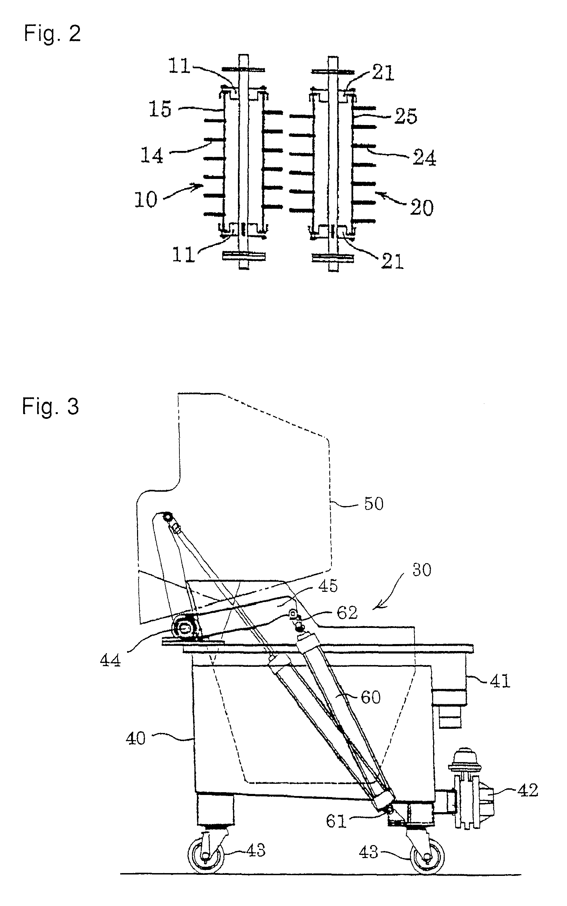

Numeral 5 designates a loosening supply device effecting a loosening function for making the sprouts that fall down through the hopper 4 loosened to become a dispersed state. The loosening supply device 5 comprises two conveyors 10, 20. The conveyors 10, 20, respectively, are endless conveyors running by turning at their respective both end portions and the two conveyors 10, 20 run at velocities different from each other. As the conveyors 10, 20 have substantially the same construction, description will be made on the constriction of the conveyor 10. The conveyor 10 comprises four sprockets in total, that is, two sprockets 11, 11 arranged with an interval maintained between them in the direction perpendicular to the plane of Fig. 1 and two sprockets 12, 12 likewise arranged, and two chains 13, 13 endlessly wound around the sprockets 11, 12. The conveyor 10 also comprises a plurality of conveyor plates 15 having their respective both ends fitted to the two chains 13, 13 so that the conveyor 10 is constructed as an endless conveyor. Each of the conveyor plates 15 has its outer surface provided with a plurality of needle members 14 that perpendicularly rise up from the outer surface of the conveyor plate 14. Parts and components of the conveyor 20 that correspond to those of the conveyor 10 are shown by reference numerals in which 10 is added to reference numerals of the conveyor 10 and description thereof will be omitted. Fig. 2 is a partial plan view seen from above of the loosening supply device 5. Running velocities of the conveyors 10, 20 constructed to run with a velocity difference between them may be appropriately selected according to the kinds, shapes, sizes, modes, etc. of the bean sprouts-like articles to be refined.

As seen in the side view of Fig. 1, the conveyors 10, 20 are arranged relative to each other such that while at their upper part, they stand apart from each other, at their lower part, they stand close to each other so that the needle members 14, 24 of the conveyors 10, 20, respectively, get into each other. The conveyors 10, 20 are so constructed that their running paths opposed to each other run in the same downward direction, as shown by arrows in Fig. 1.

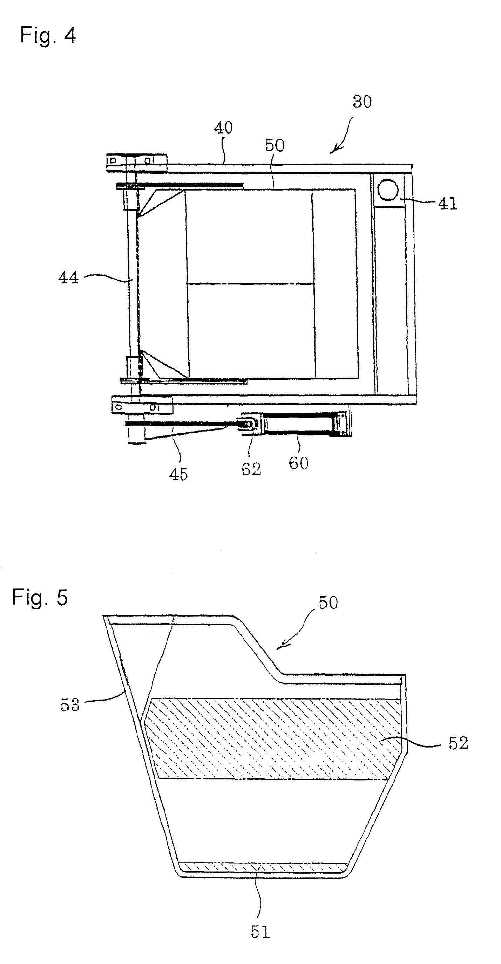

In Fig. 1, numeral 30 designates a bean sprouts-like articles refining water tank arranged below the loosening supply device 5. The bean sprouts-like articles refining water tank 30 comprises a water storage tank 40 and a refining vessel 50 arranged in the water storage tank 40. Structure of the bean sprouts-like articles refining water tank 30 is shown in Figs. 3 and 4. As seen in Figs. 1, 3 and 4, the water storage tank 40 is a water tank of a square box shape and has its front surface upper portion provided with an overflow draining portion 41 and its front surface bottom portion provided with a draining portion 42. The overflow draining portion 41 is so constructed that the level of draining is adjustable. Also, the draining portion 42 is constructed being provided with an opening/closing valve so that draining can be carried out with appropriate timing through a bottom portion of the water storage tank 40. The water storage tank 40 is constructed to be freely movable by casters 43 fitted to the bottom of the water storage tank 40 and also to be stationable by caster stoppers.

Structure of the refining vessel 50 arranged in the water storage tank 40 is shown in Fig. 5. The refining vessel 50 is formed with such a shape that while two side walls thereof are arranged in parallel with each other, front and rear walls thereof approach each other or an interval between the front and rear walls is narrowed toward a bottom portion of the refining vessel 50. The refining vessel 50 has its entire bottom portion formed with a multi-hole portion 51 and upper portions of its front wall and of both of the side walls formed with multi-hole portions 52. The size and number of holes forming the multi-hole portions 51, 52 are to be appropriately selected according to the shapes, properties, etc. of the bean sprouts-like articles to be refined. As to the rear wall 53 of the refining vessel 50, feed water is supplied therefrom, as will be described below, and no water flow is formed toward the rear wall 53. Hence, no multi-hole portion is formed in the rear wall 53.

A rotational shaft 44 that horizontally elongates is rotatably supported via bearings to a rear wall of the water storage tank 40 and the rear wall 53 of the refining vessel 50 is fixed to the rotational shaft 44. Thus, the refining vessel 50 is so constructed that when the rotational shaft 44 rotates, the refining vessel 50 is revolved, as if it is overturned, around the rotational shaft 44, as shown by fictitious lines in Fig. 3. The rotational shaft 44 has its one end fitted with one end of an arm 45. Also, the water storage tank 40 is pivotally fitted with one end 61 of an air cylinder 60. The other end 62 of the air cylinder 60 is pivotally fitted to the other end of the arm 45. By this construction, when the air cylinder 60 elongates, the arm 45 is rotated to thereby rotate the rotational shaft 44. Hence, the refining vessel 50 fitted to the rotational shaft 44 is overturned around the rotational shaft 44, as shown by the fictitious lines in Fig. 3, so that the sprouts, as refined, in the refining vessel 50 can be discharged. The bean sprouts-like articles refining device comprises a plurality of the bean sprouts-like articles refining water tanks 30 constructed as described above.

In Fig. 1, numeral 70 designates a water supply device comprising a water supply pipe 71 and a water conduit 72 that leads feed water from the water supply pipe 71 toward the bean sprouts-like articles refining water tank 30. The water conduit 72 is rotatably supported around a pin 73 to move swingingly up and down, as shown by fictitious lines in Fig. 1. While the water conduit 72 is being so moved around the pin 73 by an appropriate drive means (not shown), the feed water supplied from the water supply pipe 71 is led obliquely from above into the refining water tank 30 with the direction of the feed water being changed.

With respect to the bean sprouts-like articles refining device constructed as illustrated and described above, operation thereof will be described next. The alfalfa sprouts, as harvested, to be refined are lifted up with an approximately constant supply quantity by the scraping-up conveyor 1 to be fed into the loosening supply device 5 via the hopper 4.

In the running path of the loosening supply device 5 formed between the conveyors 10 and 20 running at velocities different from each other, portions of the needle members 14, 20 get into each other to thereby effect tearing actions of the sprouts. Thus, the sprouts fed into the loosening supply device 5 including those of the lump state are loosened to be dispersed and caused to fall down into the bean sprouts-like articles refining water tank 30 arranged below. The alfalfa sprouts caused to fall down into the water in the bean sprouts-like articles refining water tank 30 are hit by the water thrown from the water supply device 70 to thereby be further loosened. At the same time, the sprouts are applied, as a whole, with agitating actions by flow of the feed water so that unnecessary matters sticking to or mixing in the sprouts are separated into the water. The unnecessary matters separated from the sprouts float in the water and lighter ones come to the surface and most of them are entrained by the flow of the feed water in the refining vessel 50 so that they are led to the front wall and two side walls of the refining vessel 50 to be discharged outside of the refining vessel 50 through the multi-hole portions 52 and further to be discharged together with the water from the overflow draining portion 41 of the water storage tank 40. On the other hand, heavier ones of the unnecessary matters sink on the bottom of the refining vessel 50 to be discharged into the water storage tank 40 through the multi-hole portion 51 of the bottom surface and further to be discharged together with the drain outside of the draining portion 42.

In this way, in the refining vessel 50, the unnecessary matters are separated and removed from the alfalfa sprouts and discharged outside via the water storage tank 40. Thus, the sprouts are refined. The alfalfa sprouts so refined by the unnecessary matters being removed are moved together with the refining water tank 30 to a predetermined position by the rotation stoppers of the casters 43 being released. Then, the next bean sprouts-like articles refining water tank 30 is moved to the position of Fig. 1 and the next refining operation is carried out.

The bean sprouts-like articles refining water tank 30 in which refining of the sprouts has been carried out is moved to a predetermined place and the water in the water storage tank 40 is drained from the draining portion 42.

Then, if necessary, a sterilizing liquid or bleaching liquid is added so that a sterilizing treatment or bleaching treatment is carried out. Thereafter, by operating a valve (not shown), the air cylinder 60 is supplied with compressed air so that the air cylinder 60 is elongated, as shown in Fig. 3. Thereby, the refining vessel 50 is turned and the refined sprouts therein are taken out.

In the foregoing, while the bean sprouts-like articles refining device according to the present invention has been concretely described based on the sprouts refining device of the embodiment as illustrated, it is a matter of course that the present invention is not limited to the embodiment. For example, in the illustrated embodiment, while the sprouts to be refined have been described as alfalfa sprouts, the present invention is widely applicable to other bean sprouts-like articles.

Also, it is a matter of course that the present invention is not limited to the structure as illustrated but may be added with various modifications. For example, in the illustrated embodiment, while, in order for the sprouts to be refined to be supplied in the dispersed state into the refining vessel 50, such a loosening supply device 5 is used as constructed comprising the two conveyors 10, 20 provided with the plurality of rising needle members 14, 24 and running at velocities different from each other, not necessarily the illustrated device but other appropriate dispersing supply devices may be employed, if such devices can make the sprouts to be refined into the dispersed state to be supplied into the bean sprouts-like articles refining water tank. Also, as to the bean sprouts-like articles refining water tank, not necessarily the illustrated structure but devices of other appropriate structures may be employed, if such devices are constructed comprising a refining vessel that has at least one place of its bottom portion and side portions provided with the multi-hole portion and, while having its lower portion submerged in water, receives the sprouts to be refined and is supplied with feed water from the water supply device.

Also, in the illustrated device, while the plurality of the bean sprouts-like articles refining water tanks constructed to be movable by the casters are used to thereby efficiently carry out the refining steps of the sprouts including the sterilizing treatment or bleaching treatment of the sprouts, the present invention may be used for refining the bean sprouts-like articles by a single unit of the bean sprouts-like articles refining water tank.

Also, as to forming the multi-hole portions in the refining vessel, it is a matter of course that the present invention is not limited to the mode as illustrated.

Moreover, in the illustrated embodiment, while no agitating means or the like is provided in the bean sprouts-like articles refining water tank, according to the kind of the bean sprouts-like articles to be refined, an appropriate mechanical agitating means, air bubbling means or the like may be employed so that the bean sprouts-like articles to be refined in the water tank are agitated or shaken to thereby promote separation and removal of the unnecessary matters. Also, in the illustrated device, while the supply direction of the feed water to be supplied into the bean sprouts-like articles refining water tank is constructed to be changeable in the upward and downward direction, the supply direction of the feed water may be changed laterally in the rightward and leftward direction or in both of upward and downward direction and rightward and leftward direction. Further, by changing a flow velocity or flow rate of the feed water or effecting an intermittent supply of the feed water, or by appropriately combining these means, the bean sprouts-like articles in the refining vessel 50 may be given with variety of shaking modes.

## Claims

1. A refining method for separating unnecessary matters from articles, comprising the steps of:
making the articles to be refined into a dispersed state and supplying them into a refining vessel (50), said refining vessel (50) having its bottom portion and side portion at least at one place thereof formed with a multi-hole portion (51,52,53) and having a lower portion submerged in water, and
supplying feed water obliquely from above into said refining vessel (50) supplied with the articles to be refined so that the unnecessary matters are separated from the articles to be refined and discharged together with a water flow outside of said refining vessel (50) from said multi-hole portion (51,52,53).

2. The refining method as claimed in claim 1, **characterized in that** a supply angle of the feed water is changed.

3. The refining method as claimed in claim 1 or 2, **characterized in that** the articles to be refined are slender shaped articles, especially bean sprouts-like articles including harvested agricultural food articles, and the unnecessary matters to be separated therefrom are other matters sticking thereto or mixed therewith, especially dust, shells, root portions and broken fractions.

4. A refining device for separating unnecessary matters from articles, comprising:
a refining water tank (30) comprising a water storage tank (40) provided with an overflow draining portion and a refining vessel (50) provided in said water storage tank (40) with an interval maintained from at least a portion of an inner surface of said water storage tank (40) and having its bottom portion and side portion at least at one place thereof formed with a multi-hole portion (51,52,53),
a dispersing supply device (5) for supplying the articles to be refined in a dispersed state into said refining vessel (50), and
a water supply device (70) for supplying feed water obliquely from above into said refining water tank (30).

5. The refining device as claimed in claim 4, **characterized in that** said water supply device (70) is so constructed that a supply angle of the feed water can be changed.

6. The refining device as claimed in claim 4 or 5, **characterized in that** said refining water tank (30) is constructed to comprise a plurality of refining water tanks (30), each comprising said water storage tank (40) and a refining vessel (50) and being movably constructed, so that refining of the articles can be sequentially carried out by said plurality of refining water tanks (30).

7. The refining device as claimed in claim 4, 5 or 6, **characterized in that** the device is intended for articles to be refined which are slender shaped articles, especially bean sprouts-like articles including harvested agricultural food articles, and the unnecessary matters to be separated therefrom are other matters sticking thereto or mixed therewith, especially dust, shells, root portions and broken fractions.
